Europäisches Patentamt

**European Patent Office**

**Office européen des brevets**

(11) Numéro de publication: **0 345 528 B1**

(12) **FASCICULE DE BREVET EUROPEEN**

(45) Date de publication de fascicule du brevet: **02.12.92**  (51) Int. Cl.⁵: **A47J 31/54**, A47J 31/36

(21) Numéro de dépôt: **89109296.7**

(22) Date de dépôt: **23.05.89**

(54) **Dispositif pour chauffer l'eau dans une machine à café.**

(30) Priorité: **10.06.88 CH 2219/88**

(43) Date de publication de la demande:
**13.12.89 Bulletin 89/50**

(45) Mention de la délivrance du brevet:
**02.12.92 Bulletin 92/49**

(84) Etats contractants désignés:
**AT BE CH DE ES FR GB GR IT LI LU NL SE**

(56) Documents cités:
**FR-A- 1 491 609**
**FR-A- 2 085 022**
**FR-A- 2 299 839**

(73) Titulaire: **SOCIETE DES PRODUITS NESTLE S.A.**
**Case postale 353**
**CH-1800 Vevey(CH)**

(72) Inventeur: **Frisch, Martin**
**Kronenwiese 41**
**CH-8864 Reichenburg(CH)**

Rank Xerox (UK) Business Services

## Description

L'invention concerne un dispositif pour chauffer l'eau dans une machine à café entre un corps de pompe et un système d'extraction.

Il est connu de préparer des cafés espresso en injectant de l'eau chaude sous pression soit sur un lit de café moulu torréfié et tassé, soit dans une cartouche fermée contenant déjà la dose de café torréfié et moulu, par exemple celle faisant l'objet du brevet CH 605293. Le brevet FR 2299 839 concerne une machine à café pour la préparation d'un café espresso à partir d'un lit de café moulu. D'autre part, la demande de brevet EP 87107012 mentionne que pour obtenir un bon café espresso, il faut opérer en trois étapes: une phase de prémouillage du café, d'aération et d'extraction proprement dite. La présente invention concerne un dispositif permettant de mettre en oeuvre le procédé précité pour arriver à une bonne aération du café extrait, grâce à un mélange de l'eau d'extraction avec de l'air emprisonné dans le corps de chauffe.

L'invention concerne un dispositif pour chauffer l'eau dans une machine à café entre un corps de pompe et un système d'extraction, comprenant un corps de chauffe horizontal et un circuit de circulation d'eau dans ledit corps, ledit circuit étant constitué par des canaux de circulation d'eau et des poches pour la retenue d'air, situées au-dessus du niveau normal d'eau.

La pompe permet d'amener l'eau à une pression pouvant aller jusqu'à 20 bars. Dans le cas d'une extraction de cartouche, le système d'extraction est par exemple celui faisant l'objet de la demande de brevet EP 87103353.

L'eau circule ainsi dans le corps de chauffe dans des canaux comportant des poches d'air, de sorte que cet air est dissout dans l'eau, d'une part en raison de la turbulence et d'autre part en raison de l'ébullition due au chauffage. L'important est que cette dissolution d'air dans l'eau se passe sur toute la durée de l'extraction pour ainsi assurer au café espresso obtenu une mousse durable.

Selon une première forme de réalisation du dispositif selon l'invention, le circuit de circulation d'eau est sensiblement en forme de spirale, l'entrée de l'eau se faisant à la périphérie et la sortie au centre, et comporte des poches de retenue d'air en regard des canaux de circulation d'eau.

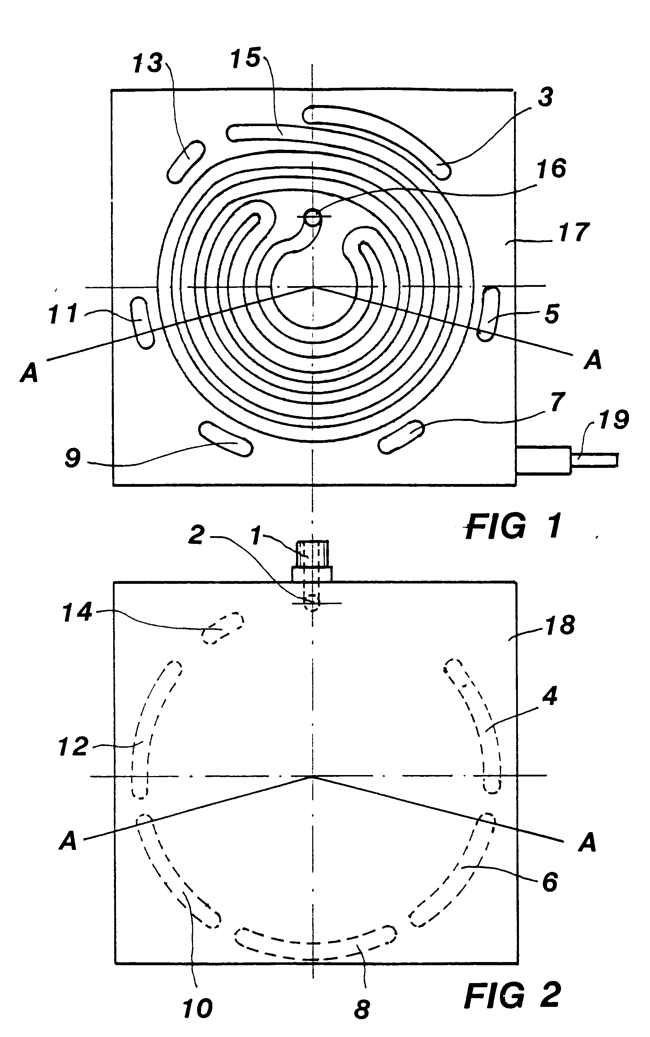

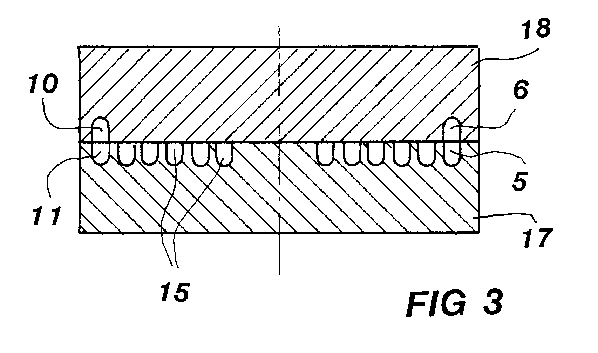

Il est possible de prévoir des poches de retenue d'air sur toute la longueur de la circulation d'eau. On peut également prévoir ces poches d'air seulement sur une partie des canaux de circulation d'eau. Selon une forme de réalisation, on dispose sur la périphérie des canaux de circulation d'eau discontinus et les poches de retenue d'air les chevauchent de manière à assurer à l'eau un bon écoulement. Cette forme de réalisation est représentée sur les Fig 1 à 3. Dans cette forme de réalisation, on peut avoir entre 2 et 10 canaux discontinus et le même nombre de poches de retenue d'air.

Suivant la section des canaux de circulation d'eau et des poches de retenue d'air, on peut avoir plus ou moins d'air dans les conduits. Ces sections sont normalement en forme de U, leur hauteur étant comprise entre 5 et 10 mm et leur largeur entre 3 et 8 mm.

Dans une seconde forme de réalisation du dispositif selon l'invention, le circuit de circulation d'eau est sensiblement hélicoïdal, l'axe de l'hélice étant horizontal, et comporte des poches de retenue d'air disposées sur la périphérie supérieure du corps de chauffe. Ce dispositif a une longueur comprise entre 8 et 20 cm et un pas d'hélice d'environ 5 mm. Les canaux de circulation d'eau et les poches de retenue d'air ont sensiblement une section en forme de U, une hauteur comprise entre 5 et 10 mm et une largeur comprise entre 3 et 8 mm.

Dans une troisième forme de réalisation du dispositif selon l'invention, le circuit de circulation d'eau est constitué de plusieurs tores, des poches de retenue d'air disposées perpendiculairement par rapport auxdits tores assurant le passage de l'eau entre deux tores successifs. Ce dispositif a une longueur comprise entre 8 et 20 cm et il comprend environ 10 tores et le même nombre de poches de retenue d'air. Comme pour le mode de réalisation précédant, les canaux de circulation d'eau de forme torique ont sensiblement une section en forme de U, une hauteur comprise entre 5 et 10 mm et une largeur comprise entre 3 et 8 mm.

Il est bien entendu qu'après chaque extraction pour une tasse de café, on arrête l'arrivée d'eau de manière à laisser entrer de l'air qui remplit à nouveau les poches correspondantes.

La suite de la description est faite en référence aux dessins sur lesquels :

Fig 1 est une vue de dessus de la partie inférieure du dispositif selon l'invention,

Fig 2 est une vue de dessus de la partie supérieure du dispositif selon l'invention,

Fig 3 est une coupe selon les lignes A - A des Fig 1 et 2,

Fig 4 est une coupe du dispositif selon l'invention dans son second mode de réalisation.

Fig 5 est une vue de dessus du corps cylindrique de la Fig 4 et

Fig 6 est une vue de dessus du corps cylindrique dans une troisième forme de réalisation.

L'eau arrive de la pompe (non représentée) dans le corps horizontal (18) par le canal (1) sort par l'orifice (2) et arrive dans le corps horizontal (17) par le canal de circulation d'eau (3). La circulation de l'eau se fait successivement dans les canaux de circulation d'eau et les poches de retenue d'air (4) à (14). Le serpentin (15) mène ensuite à l'orifice de sortie (16), puis vers le système d'extraction (non représenté).

La fiche (19) représente l'arrivée de courant pour les résistances permettant le chauffage de l'eau. Les poches de retenue d'air sont visibles sur la Fig 2. Au fur et à mesure de l'avancée de l'eau dans le système, l'air de ces poches est dissout dans l'eau. Compte tenu du débit d'eau, de la puissance électrique du corps de chauffe et du poids de tout le dispositif, l'air sera dissout dans l'eau pendant toute la durée d'extraction pour l'obtention d'une tasse de café. Compte tenu du cheminement sinueux de l'eau sur la périphérie, la turbulence ainsi créée permettra un bon mélange de l'air dans l'eau.

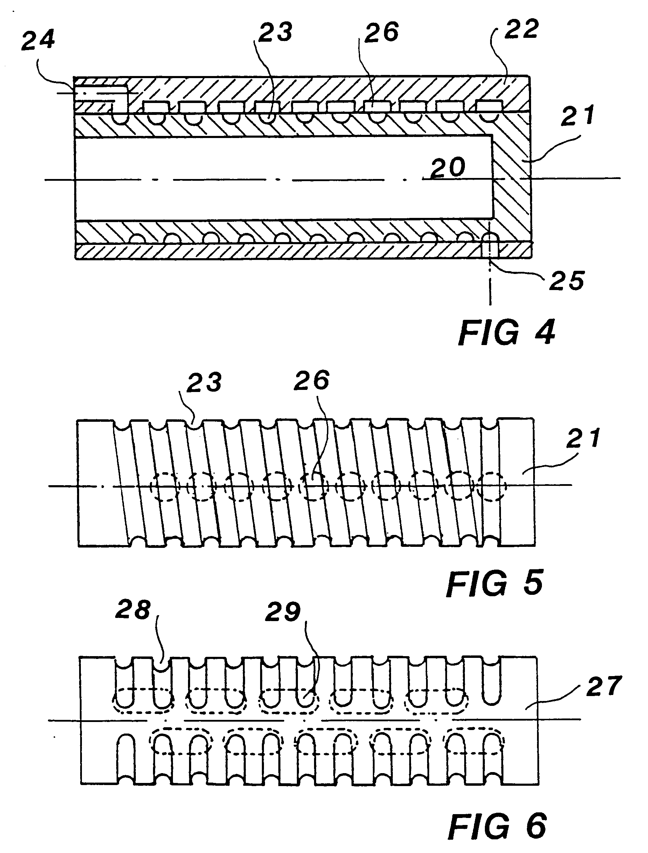

Le dispositif des Fig 4 et 5 donne un trajet hélicoïdal pour l'eau. La résistance chauffante (20) est mise au centre, le corps cylindrique (21) et le corps (22) définissant le canal (23) de circulation d'eau. Le système est placé horizontalement dans la machine à café. L'eau arrive en (24) et sort en (25). Les poches de retenue d'air (26) disposées à la partie supérieure permettent un bon mélange de l'air avec l'eau car elles sont situées chaque fois à une distance d'un tour d'hélice et assurent de ce fait une bonne turbulence de l'eau. Le dispositif, objet de la présente invention, grâce à cette dissolution d'oxygène et d'azote dans l'eau, permet la préparation d'un bon café espresso avec mousse durable et bon piégeage des arômes volatiles du café.

La Fig 6 représente seulement le corps cylindrique (27). Ce corps est prévu pour être engagé dans un corps similaire à celui représenté en (22) (Fig 4). Ce corps (27) définit des canaux de circulation d'eau (28) de forme torique, le passage d'un tore au suivant se faisant grâce aux poches de retenue (29) ménagées dans le corps entourant le corps cylindrique (27).

**Revendications**

1. dispositif pour chauffer l'eau dans une machine à café entre un corps de pompe et un système d'extraction, comprenant un corps de chauffe horizontal (18) et un circuit de circulation d'eau (3) dans ledit corps, caractérisé en ce que le circuit est constitué par des canaux de circulation d'eau (5, 7, 9, 11, 13) et des poches pour la retenue d'air (4, 6, 8, 10, 12, 14) situées au-dessus du niveau normal d'eau.

2. Dispositif selon la revendication 1 caractérisé en ce que le circuit de circulation d'eau (3) est sensiblement en forme de spirale, l'entrée de l'eau se faisant à la périphérie et la sortie au centre (16), et comporte des poches de retenue d'air (4, 6, 8, 10, 12, 14) en regard des canaux de circulation d'eau (5, 7, 9, 11, 13).

3. Dispositif selon la revendication 2, caractérisé en ce que les canaux de circulation d'eau (5, 7, 9, 11, 13) de la périphérie sont discontinus et sont chevauchés par des poches de retenue d'air (4, 6, 8, 10, 12, 14).

4. Dispositif selon la revendication 3, caractérisé en ce qu'il comporte à la périphérie entre 2 et 10 canaux discontinus et entre 2 et 10 poches de retenue d'air.

5. Dispositif selon l'une des revendications 2 à 4, caractérisé en ce que les canaux de circulation d'eau (5, 7, 9, 11, 13) et les poches de retenue d'air (4, 6, 8, 10, 12, 14) ont sensiblement une section en forme de U, une hauteur comprise entre 5 et 10 mm et une largeur comprise entre 3 et 8 mm.

6. Dispositif selon la revendication 1, caractérisé en ce que le circuit de circulation d'eau est sensiblement hélicoïdal, l'axe de l'hélice étant horizontal, et comporte des poches de retenue d'air (26) disposées sur la partie supérieure du corps de chauffe (21).

7. Dispositif selon la revendication 6, caractérisé en ce qu'il a une longueur comprise entre 8 et 20 cm, un pas d'hélice d'environ 5 mm, les canaux de circulation d'eau (23) ont sensiblement une section en forme de U, une hauteur comprise entre 5 et 10 mm et une largeur comprise entre 3 et 8 mm et les poches de retenue d'air (26) sont circulaires.

8. Dispositif selon la revendication 1, caractérisé en ce que le circuit de circulation d'eau est constitué de plusieurs tores (28), des poches de retenue d'air (29) disposées perpendiculairement par rapport auxdits tores assurant le passage de l'eau entre deux tores successifs.

9. Dispositif selon la revendication 8, caractérisé en ce qu'il a une longueur comprise entre 8 et 20 cm et un nombre de tores d'environ 10.

**Claims**

1. A device for heating water in a coffee machine between a pump and an extraction system, characterized in that it comprises a horizontal heating element (18) and a circuit (3) for the circulation of water in that element, characterized in that the circuit is formed by water circulation channels (5,7,9,11,13) and air-retaining pockets (4,6,8,10, 12,14) situated above the normal water level.

2. A device as claimed in claim 1, characterized in that the water circuit (3) is substantially spiral in shape, water entering at the periphery and leaving at the centre (16), and comprises air-retaining pockets (4,6,8,10,12,14) opposite the water circulation channels (5,7,9,11,13).

3. A device as claimed in claim 2, characterized in that the peripheral water circulation channels (5,7,9,11,13) are discontinuous and are overlapped by the air-retaining pockets (4,6,8,10,12,14).

4. A device as claimed in claim 3, characterized in that it comprises between two and ten discontinuous channels and between two and ten air-retaining pockets at the periphery.

5. A device as claimed in any of claims 2 to 4, characterized in that the water circulation channels (5,7,9,11, 13) and the air retaining pockets (4,6,8,10,12,14) are of substantially U-shaped cross-section, between 5 and 10 mm in height and between 3 and 8 mm in width.

6. A device as claimed in claim 1, characterized in that the water circuit is substantially helical, the axis of the helix being horizontal, and comprises air-retaining pockets (26) disposed on the upper part of the heating element (21).

7. A device as claimed in claim 6, characterized in that it has a length of 8 to 20 cm for a helix pitch of approximately 5 mm, the water circulation channels (23) are of substantially U-shaped cross-section with a height of 5 to 10 mm and a width of 3 to 8 mm and the air-retaining pockets (26) are circular.

8. A device as claimed in claim 1, characterized in that the water circuit consists of several rings (28), air-retaining pockets (29) arranged perpendicularly in relation to the rings ensuring the passage of water between two successive rings.

9. A device as claimed in claim 8, characterized in that it is between 8 and 20 cm long and comprises approximately ten rings.

**Patentansprüche**

1. Vorrichtung zum Erhitzen von Wasser in einer Kaffeemaschine zwischen einem Pumpenkörper und einem Extraktionssystem, mit einem horizontalen Heizkörper (18) und einem Wasserströmungskreis (3) in diesem Körper, dadurch gekennzeichnet, daß der Strömungskreis durch Wasserströmungskanäle (5, 7, 9, 11, 13) und Luftrückhaltetaschen (4, 6, 8, 10, 12, 14) gebildet ist, die oberhalb des normalen Wasserniveaus angeordnet sind.

2. Vorrichtung nach Anspruch 1, dadurch gekennzeichnet, daß der Wasserströmungskreis (3) im wesentlichen die Form einer Spirale hat, wobei der Wassereintritt am Umfang und der Austritt (16) in der Mitte gelegen sind und wobei die Luftrückhaltetaschen (4, 6, 8, 10, 12, 14) gegenüber den Wasserströmungskanälen (5, 7, 9, 11, 13) vorgesehen sind.

3. Vorrichtung nach Anspruch 2, dadurch gekennzeichnet, daß die Wasserströmungskanäle (5, 7, 9, 11, 13) am Umfang diskontinuierlich sind und von den Luftrückhaltetaschen (4, 6, 8, 10, 12, 14) überlagert werden.

4. Vorrichtung nach Anspruch 3, dadurch gekennzeichnet, daß sie am Umfang zwischen 2 und 10 diskontinuierliche Kanäle und zwischen 2 und 10 Luftrückhaltetasche aufweist.

5. Vorrichtung nach einem der Ansprüche 2 bis 4, dadurch gekennzeichnet, daß die Wasserströmungskanäle (5, 7, 9, 11, 13) und die Luftrückhaltetaschen (4, 6, 8, 10, 12, 14) im wesentlichen U-förmigen Querschnitt, eine Höhe zwischen 5 und 10 mm und eine Breite zwischen 3 und 8 mm haben.

6. Vorrichtung nach Anspruch 1, dadurch gekennzeichnet, daß der Wasserströmungskreis im wesentlichen wendelförmig ist, wobei die Wendelachse horizontal verläuft, und Luftrückhaltetaschen (26) aufweist, die im oberen Teil des Heizkörpers (21) vorgesehen sind.

7. Vorrichtung nach Anspruch 6, dadurch gekennzeichnet, daß sie eine Länge zwischen 8 und 20 cm und eine Wendelsteigung von etwa 5 mm aufweist, wobei die Wasserströmungskanäle (23) im wesentlichen U-förmigen Querschnitt, eine Höhe zwischen 5 und 10 mm und eine Breite zwischen 3 und 8 mm haben, und wobei die Luftrückhaltetaschen (26) kreisförmig sind.

8. Vorrichtung nach Anspruch 1, dadurch gekennzeichnet, daß der Wasserströmungskreis aus mehreren Torusabschnitten (28) besteht, wobei Luftrückhaltetaschen (29) senkrecht zu diesen Torusabschnitten angeordnet sind und die Wasserströmung zwischen zwei aufeinanderfolgenden Torusabschnitten ermöglichen.

9. Vorrichtung nach Anspruch 8, dadurch gekennzeichnet, daß sie eine Länge zwischen 8 und 20 cm hat und die Anzahl der Torusabschnitte etwa 10 beträgt.

FIG 1

FIG 2

FIG 3

**FIG 4**

**FIG 5**

**FIG 6**